# EUROPEAN PATENT APPLICATION

(11) **EP 4 697 361 A1**
(43) Date of publication of application: **18.02.2026**
(21) Application number: 24927485.3
(22) Date of filing: 10.12.2024
(51) Int. Cl.: G21C 7/24, G21C 1/32, G21C 3/30

(54) **OXIDE-DILUTED GADOLINIA BURNABLE ABSORBER FOR CONTROLLING SURPLUS REACTIVITY OF INNOVATIVE SMALL MODULAR REACTOR AND DESIGN METHOD THEREOF**

(30) Priority: 29.02.2024 KR 20240030058; 25.10.2024 KR 20240147533
(71) Applicant: KEPCO NUCLEAR FUEL CO., LTD., Daejeon 34057 (KR)
(72) Inventor: YOON, Jooil, Sejong 30121 (KR); KIM, Jin Sun, Daejeon 34130 (KR); JUNG, Tae Sik, Daejeon 34033 (KR); KIM, Hwansoo, Daejeon 34021 (KR)
(74) Representative: Bryn Aarflot AS
(86) International application number: PCT/KR2024/020147
(87) International publication number: WO 2025/183313

(57) **Abstract**

Disclosed is a technology related to an oxide-diluted gadolinia burnable absorber for controlling surplus reactivity of an innovative small modular reactor (i-SMR). The oxide-diluted gadolinia burnable absorber comprises: cylindrical burnable pellets formed by mixing and sintering gadolinia (Gd₂O₃) and oxides such as Al₂O₃; cylindrical oxide pellets formed of oxides such as Al₂O₃ and mounted above the burnable pellets; and a cladding layer having a plurality of burnable pellets and oxide pellets vertically stacked and mounted therein with respect to a cylindrical central axis. The inner diameter of the cladding layer is larger than the outer diameters of the burnable pellets and the oxide pellets, so that a gap is formed between the burnable pellets or the oxide pellets and the cladding layer. By using a nuclear fuel assembly integrating a high-intensity dispersed gadolinia-oxide burnable absorber (HIGA) having a high gadolinia content and an integrated gadolinia burnable absorber (IGD) having a low gadolinia content, surplus reactivity of an innovative small modular reactor (i-SMR) can be effectively controlled.

## Description

### Technical Field

The present disclosure relates to an oxide-diluted gadolinia burnable absorber for controlling excess reactivity of an innovative small modular reactor (i-SMR) and a design method thereof. Particularly, the present disclosure relates to a technology for effectively controlling excess reactivity by using a nuclear fuel assembly in which a highly intensive and discrete gadolinia/oxide burnable absorber (HIGA) and an integral gadolinia burnable absorber (IGD) are integrated.

### Background Art

A small modular reactor (SMR) has attracted considerable attention in recent years due to safety features, cost efficiency, and carbon-free energy production capability thereof. Korea has been actively participating in a development of an innovative small modular reactor (i-SMR) utilizing pressurized water reactor (PWR) technology.

The innovative small modular reactor (i-SMR) integrates essential design characteristics such as a soluble boron-free (SBF) operation, an enhanced fuel thermal margin, an extended operating cycle, and a flexible operation, thereby solving a main design objective of safety, cost efficiency, and adaptability. Since a control system for the soluble boron-free (SBF) operation does not need to adjust and monitor a boron concentration in a reactor coolant, the complexity of the overall chemical and volume control system (CVCS) is reduced.

The transition to soluble boron-free (SBF) operation and long-term cycle operation presents significant challenges, particularly in replacing the important role of soluble boron in controlling excess reactivity throughout the fuel cycle. One approach to address this problem is to utilize a control rod so as to manage excess reactivity within a core. However, since the number of control rods in the core of a small modular reactor (SMR) is limited, use of the control rods is required to be performed cautiously. Over-reliance on the control rods without additional measures may impose constraints on a core design, and may potentially lead to a situation in which a subcritical condition is not met due to high excess reactivity or a situation in which excess positive reactivity is induced during control rod ejection or withdrawal accidents. Therefore, it is essential to develop an alternative method for controlling excess reactivity to ensure safe and efficient operation of the small modular reactor (SMR).

Korean Patent No. 10-1925189, which is titled "SINTERED NUCLEAR FUEL PELLET AND MANUFACTURING METHOD THEREOF" and which is published on December 4, 2018, discloses a sintered nuclear fuel pellet that can provide efficient operation of nuclear fuel by preventing non-uniformity and crack generation of a burnable absorber. A molded body of the burnable absorber is inserted into nuclear fuel at 2 vol% or more and less than 20 vol% relative to the total volume of the nuclear fuel pellet, does not include nuclear fuel containing UO₂, is positioned in the radial center of the nuclear fuel so as to be distinguished from the nuclear fuel, and is formed in at least one shape selected from the group consisting of an irregular shape, a cylindrical shape, a disc shape, a spherical shape, a rod shape, a film shape, and a polygonal prism shape.

However, additional research is required for a burnable absorber which is capable of being simply manufactured and which is capable of being efficiently operated, and additional research is required for a nuclear fuel assembly in which the burnable absorber is applied.

### [Document of Related Art]

### [Patent Document]

(Patent Document 1) KR 10-1925189 B1 (December 04, 2018)

### Disclosure

### Technical Problem

An objective of the present disclosure is to provide an oxide-diluted gadolinia burnable absorber for controlling excess reactivity of an innovative small modular reactor (i-SMR) and a design method thereof.

Another objective of the present disclosure is to provide a highly intensive and discrete gadolinia/oxide burnable absorber (HIGA) for controlling excess reactivity of an innovative small modular reactor (i-SMR) and a design method thereof.

Still another objective of the present disclosure is to provide a nuclear fuel assembly in which a highly intensive and discrete gadolinia/oxide burnable absorber (HIGA) and an integral gadolinia burnable absorber (IGD) for controlling excess reactivity of an innovative small modular reactor (i-SMR) are integrated.

The technical problems that are intended to be addressed in the present disclosure are not restricted to the above described problems, and other problems, which are not mentioned herein, could be clearly understood by those of ordinary skill in the art from details described below.

### Technical Solution

According to an aspect of the present disclosure, there is provided an oxide-diluted gadolinia burnable absorber for controlling excess reactivity of an innovative small modular reactor (i-SMR), the oxide-diluted gadolinia burnable absorber including: a cylindrical burnable pellet formed by sintering a mixture of gadolinia (Gd₂O₃) and an oxide including any one of Al, Si, Ti, and Zr; a cylindrical oxide pellet having the same outer diameter as that of the burnable pellet and formed by sintering the oxide contained in the burnable pellet; and a cladding layer cladding a plurality of burnable pellets and the oxide pellet vertically stacked with respect to a cylindrical central axis.

An inner diameter of the cladding layer may be larger than outer diameters of the burnable pellet and the oxide pellet, so that a gap may be formed between the cladding layer and the burnable pellet and between the cladding layer and the oxide pellet. The oxide pellet may be stacked on top of the burnable pellets.

According to an additional aspect, the content of gadolinia in the burnable pellet is 10 mol% to 20 mol% of the burnable pellet.

According to an additional aspect, the oxide of the burnable pellet may be Al₂O₃.

According to another aspect of the present disclosure, there is provided a nuclear fuel assembly including an oxide-diluted gadolinia burnable absorber for controlling excess reactivity of an innovative small modular reactor (i-SMR), the nuclear fuel assembly including: a fuel rod including nuclear fuel; a coolant passage through which coolant moving heat generated by nuclear fission circulates; and a highly intensive and discrete gadolinia/oxide burnable absorber (HIGA).

The highly intensive and discrete gadolinia/oxide burnable absorber (HIGA) may include: a cylindrical burnable pellet formed by sintering a mixture of gadolinia (Gd₂O₃) and an oxide including any one of Al, Si, Ti, and Zr; a cylindrical oxide pellet having the same outer diameter as that of the burnable pellet and formed by sintering the oxide contained in the burnable pellet; and a cladding layer cladding a plurality of burnable pellets and the oxide pellet vertically stacked with respect to a cylindrical central axis.

An inner diameter of the cladding layer may be larger than outer diameters of the burnable pellet and the oxide pellet, so that a gap may be formed between the cladding layer and the burnable pellet and between the cladding layer and the oxide pellet. The oxide pellet may be stacked on top of the burnable pellets.

According to an additional aspect, the content of gadolinia in the burnable pellet is 10 mol% to 20 mol% of the burnable pellet.

According to an additional aspect, the oxide of the burnable pellet may be Al₂O₃.

According to an additional aspect, the nuclear fuel assembly may further include a first integral gadolinia burnable absorber (IGD) in which uranium oxide (UO₂) and gadolinia (Gd₂O₃) are homogeneously mixed.

The content of uranium in the first integral gadolinia burnable absorber (IGD) may be less than that of the fuel rod. The content of gadolinia in the first integral gadolinia burnable absorber (IGD) may be less than that of the highly intensive and discrete gadolinia/oxide burnable absorber (HIGA).

According to an additional aspect, the nuclear fuel assembly may further include a second integral gadolinia burnable absorber (IGD) in which uranium oxide (UO₂) and gadolinia (Gd₂O₃) are homogeneously mixed.

The content of uranium in the second integral gadolinia burnable absorber (IGD) may be less than that of the first integral gadolinia burnable absorber (IGD). The content of gadolinia in the second integral gadolinia burnable absorber (IGD) may be less than that of the highly intensive and discrete gadolinia/oxide burnable absorber (HIGA). The number of second integral gadolinia burnable absorbers (IGD) may be less than the number of highly intensive and discrete gadolinia/oxide burnable absorbers (HIGA), and may be equal to or larger than the number of first integral gadolinia burnable absorbers (IGD).

According to an additional aspect, the nuclear fuel assembly may further include a second integral gadolinia burnable absorber (IGD) in which uranium oxide (UO₂) and gadolinia (Gd₂O₃) are homogeneously mixed.

The content uranium in the second integral gadolinia burnable absorber (IGD) may be larger than that of the first integral gadolinia burnable absorber (IGD). The content of gadolinia in the second integral gadolinia burnable absorber (IGD) may be less than that of the highly intensive and discrete gadolinia/oxide burnable absorber (HIGA). The number of second integral gadolinia burnable absorbers (IGD) may be less than the number of highly intensive and discrete gadolinia/oxide burnable absorbers (HIGA), and may be equal to or less than the number of first integral gadolinia burnable absorbers (IGD).

According to an additional aspect, the nuclear fuel assembly may further include a third integral gadolinia burnable absorber (IGD) in which uranium oxide (UO₂) and gadolinia (Gd₂O₃) are homogeneously mixed.

The content of uranium in the third integral gadolinia burnable absorber (IGD) may be larger than that of the first integral gadolinia burnable absorber (IGD). The content of gadolinia in the third integral gadolinia burnable absorber (IGD) may be less than that of the highly intensive and discrete gadolinia/oxide burnable absorber (HIGA). The number of third integral gadolinia burnable absorbers (IGD) may be less than the number of highly intensive and discrete gadolinia/oxide burnable absorbers (HIGA), and may be equal to the number of second integral gadolinia burnable absorbers (IGD).

According to still another aspect of the present disclosure, there is provided an innovative small modular reactor (i-SMR) including an oxide-diluted gadolinia burnable absorber for controlling excess reactivity, the innovative small modular reactor (i-SMR) including: a core formed of nuclear fuel assemblies; a reflector formed of a stainless steel material, the reflector cylindrically surrounding the outside of the core formed of the nuclear fuel assemblies; and a reactor vessel having an inner diameter larger than an outer diameter of the reflector so that a downward flow path through which coolant passes is formed outside the reflector.

### Advantageous Effects

The highly intensive and discrete gadolinia/oxide burnable absorber (HIGA) according to the present disclosure may effectively control the excess reactivity of the innovative small modular reactor (i-SMR).

Furthermore, according to the present disclosure, the excess reactivity of the innovative small modular reactor (i-SMR) may be more effectively controlled by using the nuclear fuel assembly in which the highly intensive and discrete gadolinia/oxide burnable absorber (HIGA) and the integral gadolinia burnable absorber (IGD) are integrated.

### Description of Drawings

FIG. 1a and FIG. 1b are conceptual views illustrating a structure of a centrally-shielded burnable absorber (CSBA) according to a conventional technology and a structure of a cylindrically inserted and mechanically separated burnable absorber (CIMBA).
FIG. 2 is a phase diagram of compounds of gadolinia (Gd₂O₃) and alumina (Al₂O₃).
FIG. 3a to FIG. 3d are conceptual views illustrating a structure of a highly intensive and discrete gadolinia/oxide burnable absorber (HIGA) according to an embodiment.
FIG. 4 is an exemplary view illustrating examples in which an integral gadolinia burnable absorber (IGD) and the highly intensive and discrete gadolinia/oxide burnable absorber (HIGA) are arranged in nuclear fuel assemblies.
FIG. 5 is a graph showing reactivity according to burnup of nuclear fuel assemblies according to the arrangement of a burnable absorber (BA).
FIG. 6 is a graph showing gadolinium (Gd) density according to burnup of nuclear fuel assemblies according to the arrangement of the burnable absorber (BA).
FIG. 7 is a conceptual view illustrating an arrangement of a nuclear fuel assembly according to the number of highly intensive and discrete gadolinia/oxide burnable absorber (HIGA) rods according to an embodiment.
FIG. 8 is a graph showing reactivity according to burnup of nuclear fuel assemblies according to the number of highly intensive and discrete gadolinia/oxide burnable absorber (HIGA) rods according to an embodiment.
FIG. 9 is a graph showing gadolinium (Gd) density according to burnup of nuclear fuel assemblies according to the number of highly intensive and discrete gadolinia/oxide burnable absorber (HIGA) rods according to an embodiment.
FIG. 10a and FIG. 10b are conceptual views illustrating a schematic structure and a control rod pattern of an innovative small modular reactor (i-SMR).
FIG. 11 is a conceptual view illustrating arrangement states of nuclear fuel assemblies used in an initial operating cycle of the innovative small modular reactor (i-SMR) according to an embodiment.
FIG. 12 is a graph showing reactivity according to burnup of nuclear fuel assemblies used in the initial operating cycle of the innovative small modular reactor (i-SMR) according to an embodiment.
FIG. 13a and FIG. 13b are conceptual views illustrating loading patterns and vertical axis configurations of the nuclear fuel assemblies used in the initial operating cycle of the innovative small modular reactor (i-SMR) according to an embodiment.
FIG. 14 is a graph showing excess reactivity under an ARO condition for effective full power days (EFPD) in the initial operating cycle of the innovative small modular reactor (i-SMR) according to an embodiment.
FIG. 15a and FIG. 15b are graphs showing peak factors and critical control rod positions for effective full power days (EFPD) in the initial operating cycle of the innovative small modular reactor (i-SMR) according to an embodiment.
FIG. 16a and FIG. 16b are graphs showing timewise and assemblywise output distributions and axial output distributions by height in the initial operating cycle of the innovative small modular reactor (i-SMR) according to an embodiment.
FIG. 17 is a conceptual view illustrating arrangement states of nuclear fuel assemblies used in an equilibrium cycle of the innovative small modular reactor (i-SMR) according to an embodiment.
FIG. 18 is a graph showing reactivity according to burnup of nuclear fuel assemblies used in the equilibrium cycle of the innovative small modular reactor (i-SMR) according to an embodiment.
FIG. 19a and FIG. 19b are conceptual views illustrating loading patterns and vertical axis configurations of the nuclear fuel assemblies used in the equilibrium cycle of the innovative small modular reactor (i-SMR) according to an embodiment.
FIG. 20 is a graph showing excess reactivity under an ARO condition for effective full power days (EFPD) in the equilibrium cycle of the innovative small modular reactor (i-SMR) according to an embodiment.
FIG. 21a and FIG. 21b are graphs showing peak factors and critical control rod positions for effective full power days (EFPD) in the equilibrium cycle of the innovative small modular reactor (i-SMR) according to an embodiment.
FIG. 22a and FIG. 22b are graphs showing timewise and assemblywise output distributions and axial output distributions by height in the equilibrium cycle of the innovative small modular reactor (i-SMR) according to an embodiment.

### Mode for Invention

The foregoing and additional aspects are embodied through embodiments described with reference to the accompanying drawings. It is understood that elements of each embodiment may be variously combined within the embodiment or with elements of another embodiment without other mentions or contradiction with each other. Terms used in the specification and claims should be interpreted as means and a concept consistent with a description or proposed technical spirit on the basis of the principle that the inventor may appropriately define the concept of terms to describe the disclosure thereof in the best way. In the specification, a module or a part may be a set of program instructions stored in a memory to be executed on a computer or a processor, or may be realized using a set of electronic components or circuits such as an ASIC or an FPGA to execute the instructions. In addition, the operation of each module or part may be performed by one or a plurality of elements denoted by the same or similar of processors or devices. Reference numerals perform the same or similar functions, so a description thereof may be omitted. For elements with reference numerals of which descriptions are omitted, the content previously described for the elements denoted by the same or similar reference numerals may be referred to.

Table 1 shows main design features of an innovative small modular reactor (i-SMR) according to an embodiment.

**[Table 1]**

| Feature Reactor Type | Value Integral PWR |
|---|---|
| Plant Capacity (Number of Reactors) | 680 MWe (4) |
| Thermal/Electrical Capacity per Reactor | 520 MWth / 170 MWe |
| Reactor Coolant Pump | Vertical canned motor type |
| NSSS Operating Pressure | 15 MPa |
| Core Inlet/Outlet Coolant Temperature | 295.5°C / 320.0°C |
| Fuel Type/Assembly Array | UO₂ / 17 × 17 square pitch |
| Number of Fuel Assemblies in Core | 69 |
| Fuel Enrichment | < 5 w/o |
| Core Burnup | < 62,000 MWD/MTU |
| Reloading cycle | 24 months |
| Batch | Two batches |
| Reactivity Control (Boron-free operation) | Control rod, burnable absorber rods or moderator temperature |
| Steam Generator | Helical once-through type |
| Safety System | Fully passive |
| Design life | 80 years |
| Seismic Design (SSE) | 0.5 g |

Hereinafter, an exemplary embodiment of the present disclosure will be described in detail with reference to the accompanying drawings.

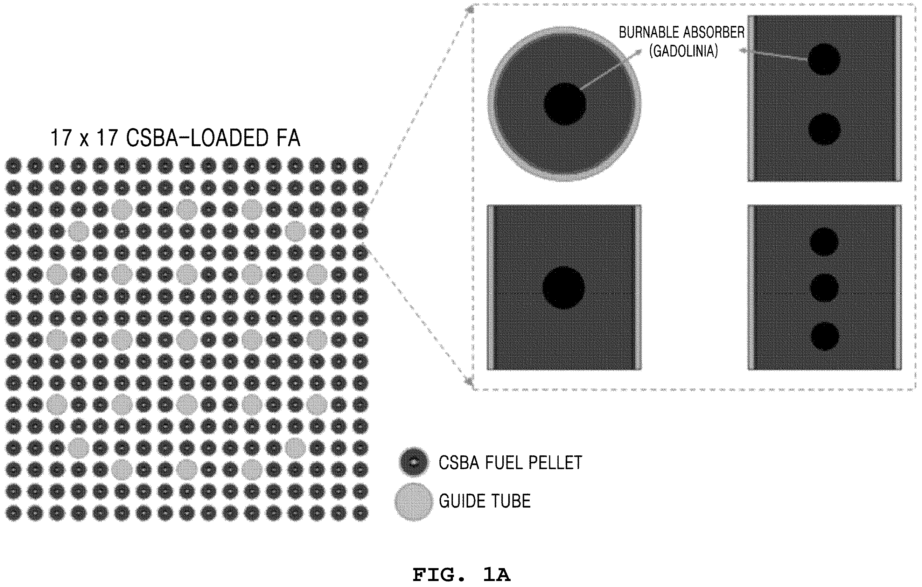

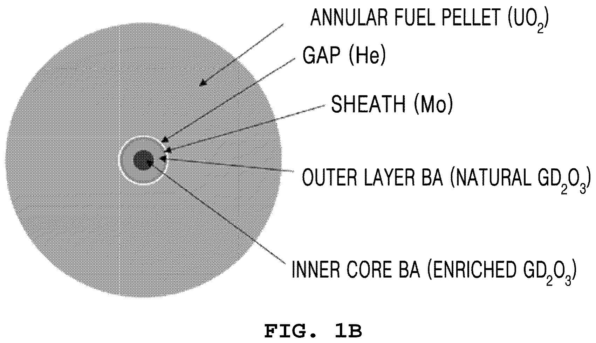

FIG. 1a and FIG. 1b are conceptual views illustrating a structure of a centrally-shielded burnable absorber (CSBA) according to a conventional technology and a structure of a cylindrically inserted and mechanically separated burnable absorber (CIMBA).

FIG. 1a is a conceptual view illustrating the structure of the centrally-shielded burnable absorber (CSBA), and FIG. 1b is a conceptual view illustrating the structure of the cylindrically inserted and mechanically separated burnable absorber (CIMBA).

Referring to FIG. 1a, the centrally-shielded burnable absorber (CSBA) utilizes a spatial self-shielding effect in order to delay a depletion of a burnable absorber (BA) by integrating ball-shaped gadolinia (GD₂O₃) into uranium dioxide (UO₂) pellets. Through this structure, the CSBA is capable of maintaining a reactivity swing below 1000 pcm throughout a cycle, thereby ensuring a uniform distribution in all fuel pellets and minimizing power distortion in a core.

Referring to FIG. 1b, the cylindrically inserted and mechanically separated burnable absorber (CIMBA) is formed of cylindrical gadolinia inserted into annular fuel pellets, and utilizes a spatial self-shielding effect. In order to control the reactivity increase caused by gadolinia depletion, the CIMBA may employ a mixed loading strategy utilizing either a multi-layer configuration (ML-CIMBA) or two different types of CIMBA (MIX-CIMBA) so as to further increase the self-shielding effect according to burnup. The burnable absorber (BA) may be efficiently and progressively depleted by utilizing enriched gadolinium isotopes known for high neutron absorption capability thereof, particularly ¹⁵⁵Gd and ¹⁵⁷Gd.

However, practical manufacturing problems associated with the CSBA and the CIMBA, such as making annular pellets with central voids and inserting thin gadolinia pins, impede manufacturability and cause a significant economic problem due to the lack of established gadolinium (Gd) enrichment facilities and associated high costs. Therefore, there is a need to develop a new burnable absorber (BA) with increased manufacturability for soluble boron-free (SBF) operation in the innovative small modular reactor (i-SMR). The new burnable absorber (BA) is required to satisfy a basic nuclear design evaluation while satisfying a design requirement of the innovative small modular reactor (i-SMR).

Among existing burnable absorbers (BA), an integral gadolinia burnable absorber (IGD) contains gadolinia (Gd₂O₃) of 2 wt% to 8 wt% homogeneously mixed with uranium dioxide (UO₂). Such an integral gadolinia burnable absorber (IGD) is effective in managing an excess reactivity for a period of 10 GWD/MTU to 15 GWD/MTU. However, such an IGD does not satisfy a 24-month operating cycle and a soluble boron-free (SBF) operation requirement of the innovative small modular reactor (i-SMR). For the soluble boron-free (SBF) operation, it is important to maintain the excess reactivity at near critical level for the 24-month cycle, which corresponds to approximately 20 MWD/MTU of cycle burnup or 40 MWD/MTU of core burnup. In order to solve this problem and to increase the manufacturability, a new burnable absorber (BA) is required.

Traditionally, boron (B-10) and gadolinia are preferred materials for burnable absorbers (BA) due to strong neutron absorption characteristics thereof. While boron is preferred for a stable burnup characteristic thereof, transmutation of boron to helium and lithium upon depletion may increase an internal pressure in a rod. Therefore, gadolinium (Gd) is more preferred than boron. However, gadolinia (Gd₂O₃), which is a rare earth oxide, has two challenging issues for being applied as a standalone material in a reactor.

The first issue is the complication of maintaining structural stability within a reactor environment due to irreversible phase transformation from a cubic (C-type) form to a monoclinic (B-type) form. Gadolinia (Gd₂O₃) exists in three major polymorphic forms including a hexagonal (A-type) form, the monoclinic (B-type) form, and the cubic (C-type) form, where the C-type form is stable at a low temperature and transforms to B-type form at a high temperature. Gadolinia (Gd₂O₃) is heated to approximately 1250°C and transforms to the B-type form during manufacturing burnable absorber pellets. Gadolinia (Gd₂O₃) transformed to the B-type form does not revert to the C-type form upon cooling. However, under specific conditions such as internal defects caused by thermal energy absorbed in the reactor and neutron interactions, the B-type form may transform back to the C-type form. When the B-type monoclinic form (density 7.618 g/cm³) is transformed to the C-type cubic form (density 8.352 g/cm³), the density increases by approximately 10%. As a result, a significant compressive stress may occur, thereby damaging the structural integrity of the pellet and causing decomposition and pulverization.

The second issue is rapid moisture absorption due to a high basicity of a material when pellets entirely formed of gadolinia (Gd₂O₃) are utilized in a high-temperature neutron environment. Generally, an oxygen defect in a Gd₂O₃ matrix is filled with hydroxyl groups, which increases weight and volume. As a result, when a metal rod which surrounds gadolinia (Gd₂O₃) and which isolates gadolinia (Gd₂O₃) from an external high-temperature and high-pressure coolant is damaged, gadolinia (Gd₂O₃) is hydrated to Gd(OH)₃, so that an effective form for controlling the reactivity is lost. This transformation undermines the usefulness of gadolinia (Gd₂O₃) in reactor reactivity management. Therefore, in order to ensure stable use of gadolinia (Gd₂O₃) in the reactor, it is necessary to combine gadolinia (Gd₂O₃) with other metal oxides so as to transform gadolinia (Gd₂O₃) and mitigate the irreversible transformation and a hydration phenomenon of rare earth oxides.

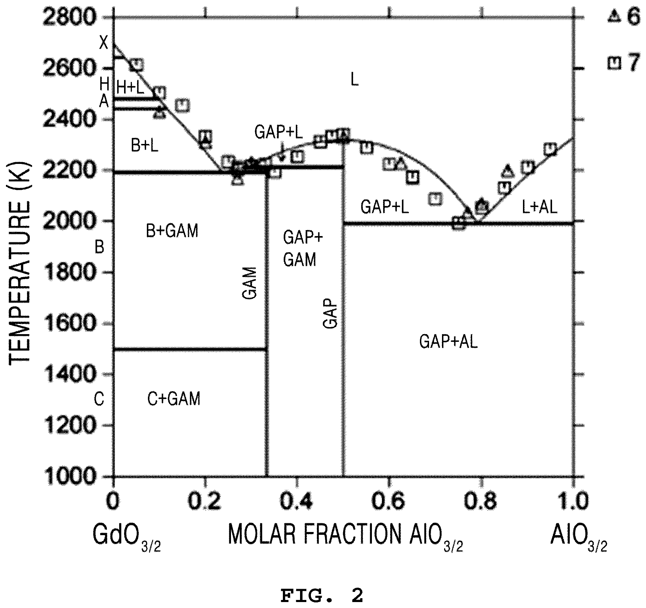

FIG. 2 is a phase diagram of compounds of gadolinia (Gd₂O₃) and alumina (Al₂O₃).

When Al₂O₃ is added to gadolinia (Gd₂O₃) at a ratio exceeding 50 mol%, a GdAlO₃ phase having a perovskite structure is formed as illustrated in FIG. 2. This phase does not exhibit the rapid moisture absorption characteristics of rare earth oxides. In addition, since there is no unstable high temperature monoclinic structure, sudden transition to the cubic phase is impossible even in a neutron-rich environment of a reactor. Therefore, the burnable absorber (BA) may be manufactured by mixing an appropriate ratio of Al₂O₃ to mitigate problems caused by Gd₂O₃ while maintaining the appropriate content of gadolinia for optimally controlling excess reactivity.

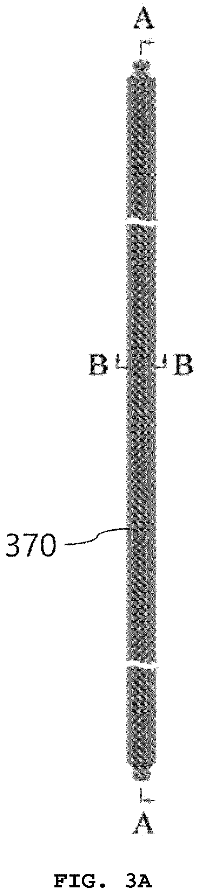

FIG. 3a to FIG. 3d are conceptual views illustrating a structure of a highly intensive and discrete gadolinia/oxide burnable absorber (HIGA) according to an embodiment.

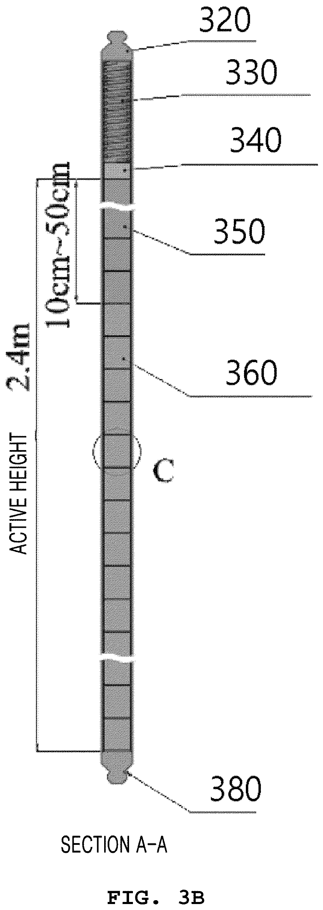

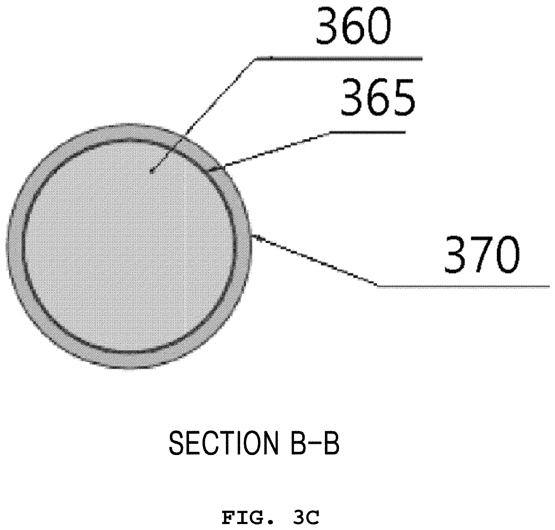

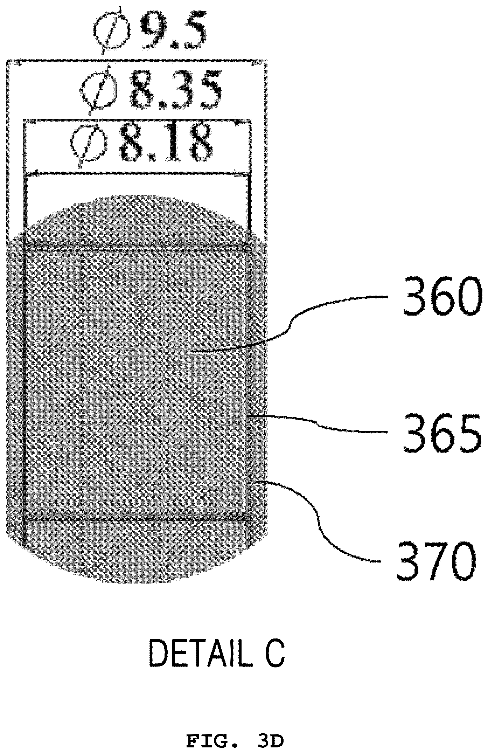

FIG. 3a is a front view illustrating an outer portion of an oxide-diluted gadolinia burnable absorber for controlling excess reactivity of an innovative small modular reactor (i-SMR) viewed from the front, FIG. 3b is a cross-sectional view illustrating the burnable absorber shown in FIG. 3a taken vertically (A-A) and viewed from a side surface thereof, FIG. 3c is a cross-sectional view illustrating the burnable absorber shown in FIG. 3a taken horizontally (B-B) and viewed from above, and FIG. 3d is an enlarged view illustrating section C of the burnable absorber shown in FIG. 3b.

In FIG. 3a, the outer portion of the oxide-diluted gadolinia burnable absorber for controlling excess reactivity of the innovative small modular reactor (i-SMR) is surrounded by a cladding layer 370. The oxide-diluted gadolinia burnable absorber is formed in a streamlined shape similar to a conventional fuel rod.

Referring to FIG. 3b, the burnable absorber includes burnable pellets 360, oxide pellets 350, and the cladding layer 370. An upper end and a lower end of the burnable absorber are sealed with an upper cap 320 and a lower cap 380, respectively. A plurality of burnable pellets 360 and at least one oxide pellet 350 that are vertically stacked above the lower cap 380 with respect to a cylindrical central axis are mounted inside the cladding layer 370. A spacer 340, a spring 330, and the upper cap 320 are positioned above the oxide pellet 350.

Referring to FIG. 3c, in the burnable absorber, the cylindrical burnable pellets 360 concentric with the cladding layer 370 are positioned inside the cladding layer 370.

Referring to FIG. 3d, an inner diameter of the cladding layer 370 is larger than an outer diameter of the burnable pellet 360 and an outer diameter of the oxide pellet 350. Therefore, a gap 365 filled with air is formed between the cladding layer 370 and the burnable pellet 360 and between the cladding layer 370 and the oxide pellet 350.

In the burnable pellet 360, a burnable material formed of gadolinia and oxide is uniformly distributed. The burnable pellet 360 may be manufactured by mixing and sintering gadolinia (Gd₂O₃) and oxide. It is preferable that the oxide includes any one selected from Al, Si, Ti, and Zr. That is, oxides such as Al₂O₃, SiO₂, TiO₂, ZrO₂, Zr₂O₃ that are sintered with gadolinia to form compounds insoluble in water may be used. Referring to FIG. 3c, an example in which Al₂O₃ is used as the oxide of the burnable pellet 360 is illustrated.

The oxide pellet 350 is stacked on top of the burnable pellets 360. The oxide pellet 350 is included so as to prevent a top-peaked axial profile during pulling a control rod. The oxide pellet 350 is formed in the same cylindrical shape as the burnable pellet 360 so as to facilitate assembly. It is preferable that the oxide pellet 350 is manufactured by sintering the oxide used in the burnable pellet. Referring to FIG. 3b, an example in which the oxide pellet 350 is manufactured from Al₂O₃ is illustrated.

When the content of gadolinia (Gd₂O₃) in the burnable pellet 360 is 10 mol% to 20 mol% of the burnable pellet as shown in FIG. 3c, the oxide-diluted gadolinia burnable absorber may be used as the highly intensive and discrete gadolinia/oxide (e.g. alumina) burnable absorber (HIGA). A larger amount of gadolinia is integrated into the highly intensive and discrete gadolinia/oxide burnable absorber (HIGA), so that the self-shielding effect may be increased.

The highly intensive and discrete gadolinia/oxide burnable absorber (HIGA), which is the oxide-diluted gadolinia burnable absorber with the increased content of gadolinia within an appropriate range, may optimize excess reactivity control of the innovative small modular reactor (i-SMR) and may ensure high manufacturability.

According to another aspect of the present disclosure, a nuclear fuel assembly including an oxide-diluted gadolinia burnable absorber for controlling excess reactivity in an innovative small modular reactor (i-SMR) includes a fuel rod containing nuclear fuel, a coolant flow passage through which coolant moving heat generated by nuclear fission flows, and a highly intensive and discrete gadolinia/oxide burnable absorber (HIGA).

The highly intensive and discrete gadolinia/oxide burnable absorber (HIGA) includes cylindrical burnable pellets formed by sintering a mixture of gadolinia (Gd₂O₃) and oxide containing any one selected from Al, Si, Ti, and Zr, cylindrical oxide pellets having the same outer diameter as the burnable pellets and formed by sintering an oxide included in the burnable pellets, and a cladding layer cladding a plurality of burnable pellets and oxide pellets vertically mounted inside the cladding layer along a cylindrical central axis.

An inner diameter of the cladding layer is larger than an outer diameter of the burnable pellet and an outer diameter of the oxide pellet, so that a gap is formed between the burnable pellet and the cladding layer and between the oxide pellet and the cladding layer. The oxide pellet is stacked on top of the burnable pellets.

According to an additional aspect, the content of gadolinia in the burnable pellet is 10 mol% to 20 mol% of the burnable pellet.

According to another aspect, the oxide of the burnable pellet is Al₂O₃.

The performance of nuclear fuel assemblies including highly intensive and discrete gadolinia/oxide burnable absorber (HIGA) was comparatively evaluated against cases without a burnable absorber and cases with an integral gadolinia burnable absorber (IGD).

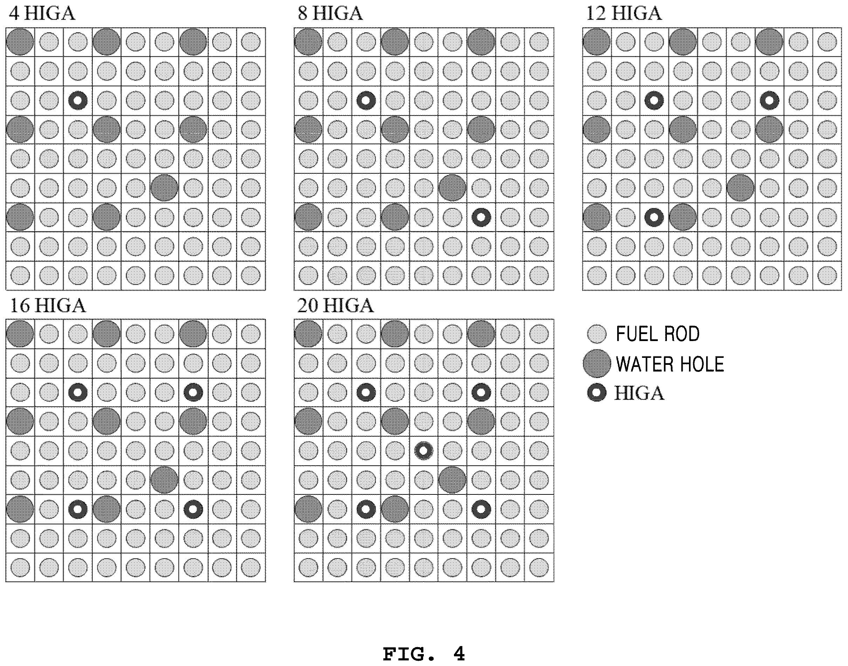

FIG. 4 is an exemplary view illustrating examples in which the integral gadolinia burnable absorber (IGD) and the highly intensive and discrete gadolinia/oxide burnable absorber (HIGA) are arranged in nuclear fuel assemblies.

FIG. 4 shows a standard 2D configuration of 17 × 17 SMR nuclear fuel assemblies. Light gray circles represent fuel rods, and dark gray circles represent coolant flow passages (water holes) through which coolant moving heat generated by nuclear fission flows.

A first arrangement (NOBA) in FIG. 4 represents the case without the burnable absorber (BA), and a second arrangement (20 IGD) represents the case in which 20 (= 4 × 5) integral gadolinia burnable absorbers (IGD 8 w/o) with 8% gadolinia (Gd₂O₃) concentration are arranged. A third arrangement (20 HIGA) represents the case in which 20 (= 4 × 5) highly intensive and discrete gadolinia/oxide burnable absorbers (HIGA) with 20% gadolinia (Gd₂O₃) concentration are arranged.

Neutron analysis including static and depletion calculations was performed using a 2D transport lattice code KARMA.

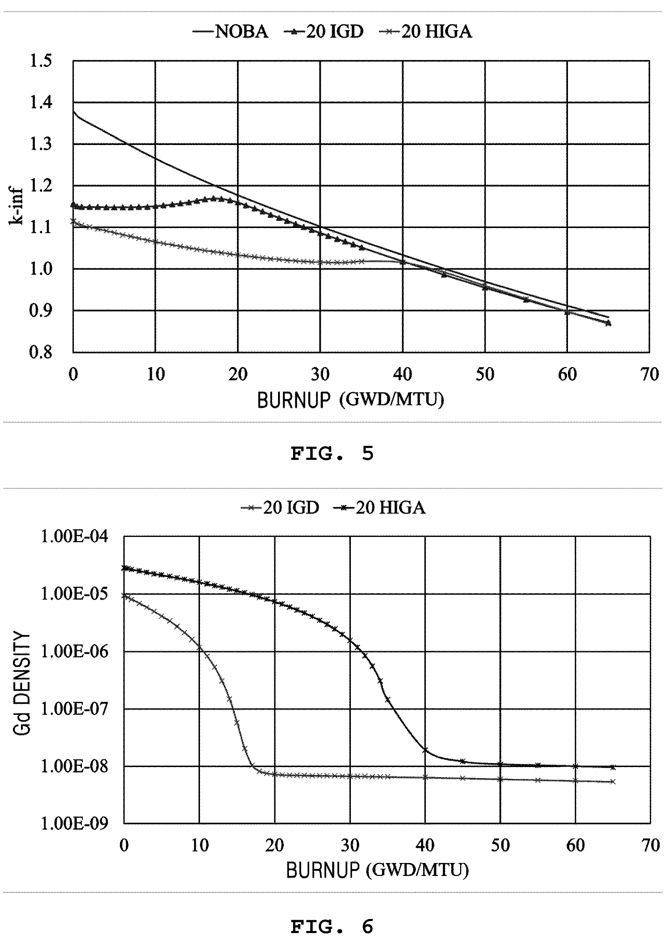

FIG. 5 is a graph showing reactivity according to burnup of nuclear fuel assemblies according to the arrangement of the burnable absorber (BA).

The unmarked line represents the graph for the first arrangement (NOBA) in FIG. 4 without the burnable absorber, the triangle-marked line represents the graph for the second arrangement (20 IGD) using the integral gadolinia burnable absorbers (IGD) in FIG. 4, and the ×-marked line represents the graph for the third arrangement (20 HIGA) using the highly intensive and discrete gadolinia/oxide burnable absorbers (HIGA) in FIG. 4.

The IGD assembly (triangle-marked) in which 8 wt% burnable absorber (BA) rods are mounted shows reactivity lower than that of the assembly (×-marked) containing HIGA rods. However, the reactivity hold-down period of the IGD assembly was limited to less than 20 GWD/MTU due to rapid gadolinia depletion, and the reactivity of the IGD assembly was gradually decreased after gadolinia burnup. Conversely, the HIGA assembly shows an extended reactivity hold-down period of up to 40 GWD/MTU due to the increased spatial self-shielding effect.

FIG. 6 is a graph showing gadolinium (Gd) density according to burnup of nuclear fuel assemblies according to the arrangement of the burnable absorber (BA).

FIG. 6 shows gadolinia depletion patterns in the IGD assembly and the HIGA assembly. the ×-marked line represents the graph for the second arrangement (20 IGD) using the integral gadolinia burnable absorbers (IGD) in FIG. 4, and the *-marked line represents the graph for the third arrangement (20 HIGA) using the highly intensive and discrete gadolinia/oxide burnable absorbers (HIGA) in FIG. 4.

The HIGA assembly shows longer and more gradual gadolinia depletion compared to that of the IGD assembly.

Meanwhile, the gradual and consistent decrease in excess reactivity from the beginning of the HIGA assembly suggests that integrating both IGD rods and HIGA rods in a fuel assembly is more effective for efficient control of excess reactivity.

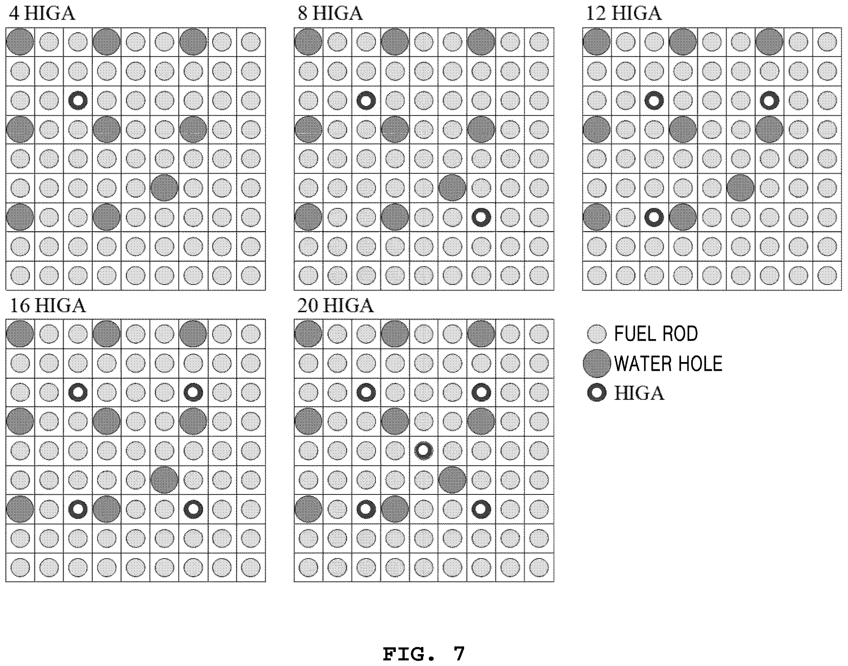

FIG. 7 is a conceptual view illustrating an arrangement of a nuclear fuel assembly according to the number of highly intensive and discrete gadolinia/oxide burnable absorber (HIGA) rods according to an embodiment.

By using various amounts of HIGA rods (20% Gd₂O₃) so as to explore reactivity changes, fundamental data for core design that can efficiently manage excess reactivity over long periods may be collected.

In FIG. 7, HIGA rods are indicated by double circles. In order, 4, 8, 12, 16, and 20 HIGA rods may be arranged in nuclear fuel assemblies.

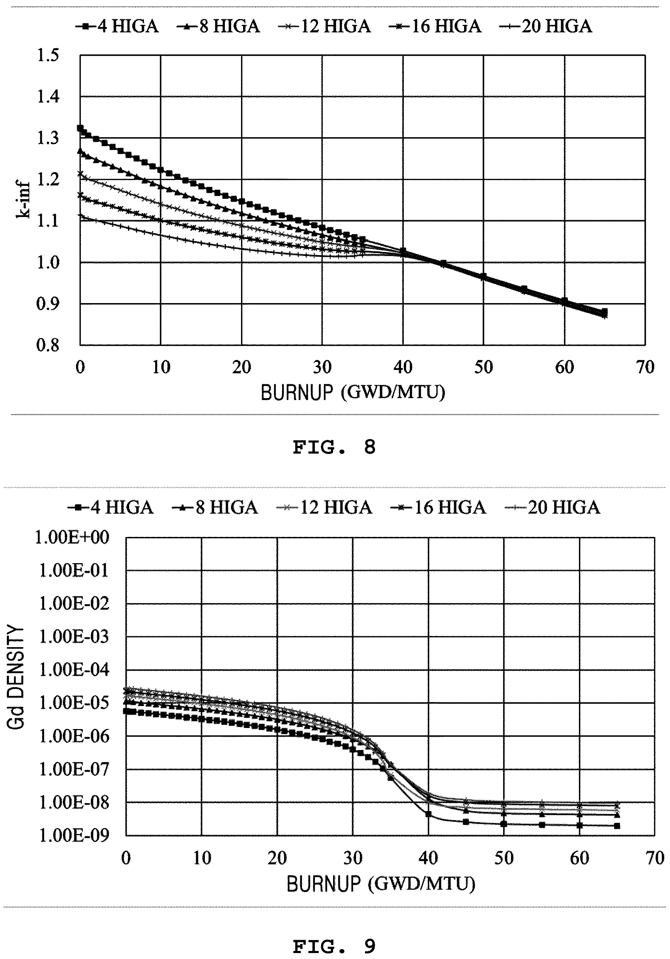

FIG. 8 is a graph showing reactivity according to burnup of nuclear fuel assemblies according to the number of highly intensive and discrete gadolinia/oxide burnable absorber (HIGA) rods according to an embodiment.

Referring to FIG. 8, it can be seen that the reactivity hold-down period extends to approximately 40 GWD/MTU. In addition, when the reactivity behavior related to the number of HIGA rods is analyzed, it can be confirmed that the efficacy of reactivity suppression increases with the number of HIGA rods.

FIG. 9 is a graph showing gadolinium (Gd) density according to burnup of nuclear fuel assemblies according to the number of highly intensive and discrete gadolinia/oxide burnable absorber (HIGA) rods according to an embodiment.

Referring to FIG. 9, due to the significant self-shielding effect of each HIGA rod, gadolinia is slowly depleted up to a maximum of 35 GWD/MTU regardless of the number of HIGA rods. Beyond this point, rapid burnup occurs up to approximately 40 GWD/MTU, resulting in nearly complete depletion of gadolinia (Gd₂O₃).

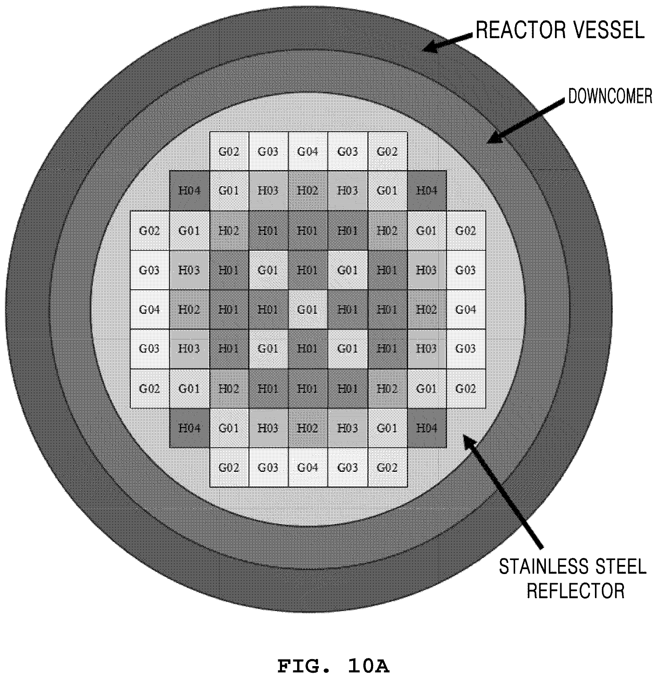

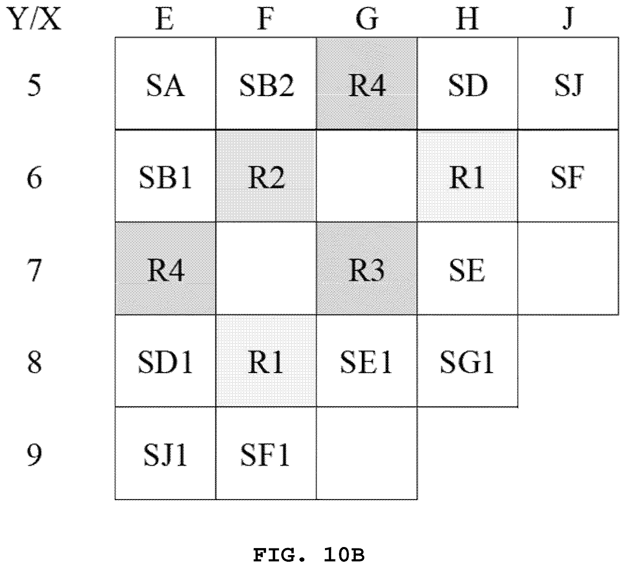

FIG. 10a and FIG. 10b are conceptual views illustrating a schematic structure and a control rod pattern of an innovative small modular reactor (i-SMR).

FIG. 10a and 10b show a core design and the control rod pattern of the innovative small modular reactor (i-SMR). A top-mounted ICI (Integral Control Instrumentation) system is integrated so as to enhance the safety of the innovative small modular reactor (i-SMR), so that penetration through a bottom of a reactor vessel is prevented. This system is formed of 16 ICIs strategically positioned so as to monitor core conditions. However, adopting the top-mounted ICI reduces the number of available control rods to 53, potentially compromising subcriticality under ARI (All Rod-In) and N-1 (Stuck Rod-Out) conditions.

The control rod is formed of four optimized regulating bank groups R1, R2, R3, R4 and one shutdown bank group SB on the basis of factors such as excess reactivity, power distribution, subcriticality considerations, and so on. Using Ag-In-Cd for control bank regulation minimizes the impact of control rod burnup, while the shutdown bank utilizes B₄C with 95% of B-10 concentration to increase shutdown margin and ensure subcriticality.

Integration of highly intensive and discrete gadolinia/oxide burnable absorber (HIGA) requires careful uranium loading evaluation. This is because, when the HIGA rod is included, the number of fuel rods is proportionally reduced, and the average nominal output density of the fuel is potentially increased. In order to mitigate this situation, the quantity of HIGA rods may be limited to 16 to balance the 24-month cycle target with compliance to power peaking limits. When this configuration is used, the nominal linear output density of the fuel rod is set to 3.86 kW/ft, which is 30% lower than a conventional PWR such as OPR1000 and APR1400 that have a linear output density approximately 5.5 kW/ft.

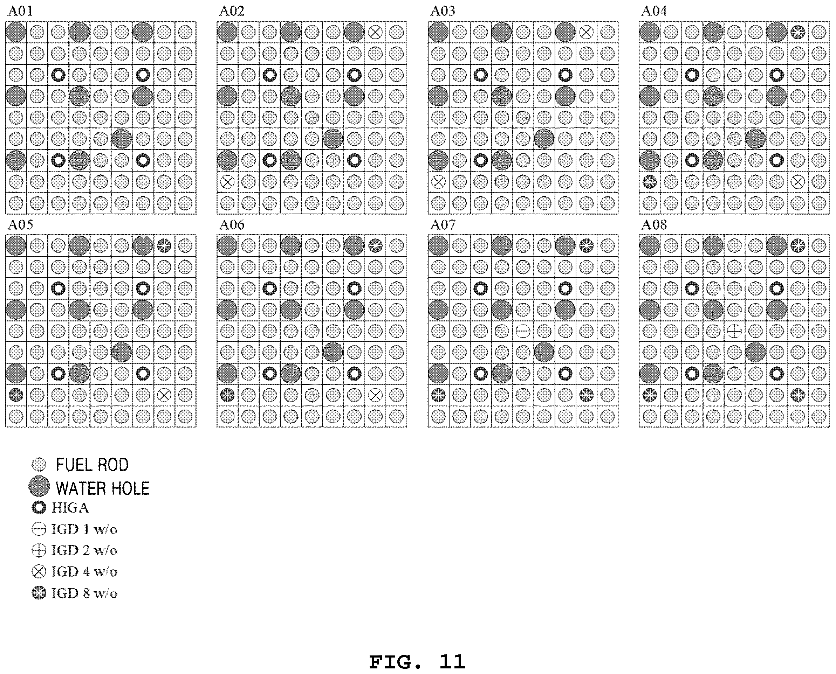

FIG. 11 is a conceptual view illustrating arrangement states of nuclear fuel assemblies used in an initial operating cycle of the innovative small modular reactor (i-SMR) according to an embodiment.

According to an additional aspect, the nuclear fuel assembly further includes a first integral gadolinia burnable absorber (IGD) in which uranium oxide (UO₂) and gadolinia (Gd₂O₃) are homogeneously mixed.

The content of uranium in the first integral gadolinia burnable absorber (IGD) is less than that of the fuel rod. The content of gadolinia in the first integral gadolinia burnable absorber (IGD) is less than that of the highly intensive and discrete gadolinia/oxide burnable absorber (HIGA).

According to an additional aspect, the nuclear fuel assembly further includes a second integral gadolinia burnable absorber (IGD) in which uranium oxide (UO₂) and gadolinia (Gd₂O₃) are homogeneously mixed.

The content of uranium in the second integral gadolinia burnable absorber (IGD) is less than that of the first integral gadolinia burnable absorber (IGD). The content of gadolinia in the second integral gadolinia burnable absorber (IGD) is less than that of the highly intensive and discrete gadolinia/oxide burnable absorber (HIGA). The number of second integral gadolinia burnable absorbers (IGD) is less than the number of highly intensive and discrete gadolinia/oxide burnable absorbers (HIGA) and equal to or larger than the number of first integral gadolinia burnable absorbers (IGD).

The innovative small modular reactor (i-SMR) uses a two-batch loading pattern so as to facilitate a 24-month operating cycle. The nuclear design of the initial cycle includes various nuclear fuel assembly configurations with different loading patterns of HIGA rods and IGD rods tailored to the characteristics of burnable absorbers (BA).

Considering that only fresh fuel is loaded in the first cycle, it is necessary to use an assembly with a flat reactivity curve so as to manage excess reactivity within the core.

Consequently, eight types of fuel assemblies with flat reactivity curves were selected according to the number of IGD rods (4 to 12 rods containing 1 wt% to 8 wt% of Gd₂O₃) and 16 HIGA rods (containing Gd₂O₃ content in the range of 10 wt% to 18 wt%). A specific configuration of the selected fuel assemblies is shown in FIG. 11 and Table 2. In the drawing, the numbers for IGD indicate the gadolinia (Gd₂O₃) content. For example, IGD 4 w/o represents an IGD rod containing 4 wt% of gadolinia.

Table 2 shows the specific configuration of the nuclear fuel assemblies used in the initial operating cycle of the innovative small modular reactor (i-SMR) according to an embodiment.

**[Table 2]**

| Type | Fuel rod | Burnable Absorber Rod | | | | | | |
|---|---|---|---|---|---|---|---|---|
| | | HIGA | 1st IGD | | | 2nd IGD | | |
| | U-235 (%) | GD₂O₃ (%) | U-235 (%) | GD₂O₃ (%) | Number | U-235 (%) | GD₂O₃ (%) | Number |
| A01 | 4.00 | 10 | - | - | - | - | - | - |
| A02 | 4.00 | 10 | 3.50 | 4 | 4 | - | - | - |
| A03 | 4.00 | 12 | 3.50 | 4 | 4 | - | - | - |
| A04 | 4.00 | 14 | 3.50 | 4 | 4 | 2.50 | 8 | 4 |
| A05 | 4.00 | 15 | 3.50 | 4 | 4 | 2.50 | 8 | 4 |
| A06 | 4.00 | 16 | 3.50 | 4 | 4 | 2.50 | 8 | 4 |
| A07 | 4.00 | 18 | 3.95 | 1 | 4 | 2.50 | 8 | 8 |
| A08 | 4.00 | 18 | 3.75 | 2 | 4 | 2.50 | 8 | 8 |

The enrichment of regular fuel rods is standardized at 4 wt% across all assembly types. Each assembly has a 10cm top cutback region for controlling axial output distribution toward the end of the cycle, especially when the control bank is mainly withdrawn.

The design of the nuclear fuel assembly pattern including HIGA shown in FIG. 11 pertains to the design of nuclear fuel assemblies for the soluble boron-free initial core (first cycle) design. In a soluble boron-free core, since there is no boric acid, soluble boron-free core design is possible through control of the excess reactivity of each assembly. The first cycle used 8 types of assemblies for core design, and each type serves to achieve flat excess reactivity during the cycle at loading positions within the core loading pattern.

In order to control excess reactivity, HIGA rods and IGD rods were arranged as shown in FIG. 11. Burnable absorber rods are generally placed near guide tubes where moderator (water) is abundant to appropriately absorb neutrons. The objective is excess reactivity control using IGD in early cycle and utilizing the self-shielding effect of the burnable absorber material of the HIGA after mid-cycle. In addition, HIGA rod usage was set to 16 rods to minimize the impact on linear output density (kW/ft), and the arrangement shown in FIG. 11 was selected to stabilize radial output distribution within the assembly.

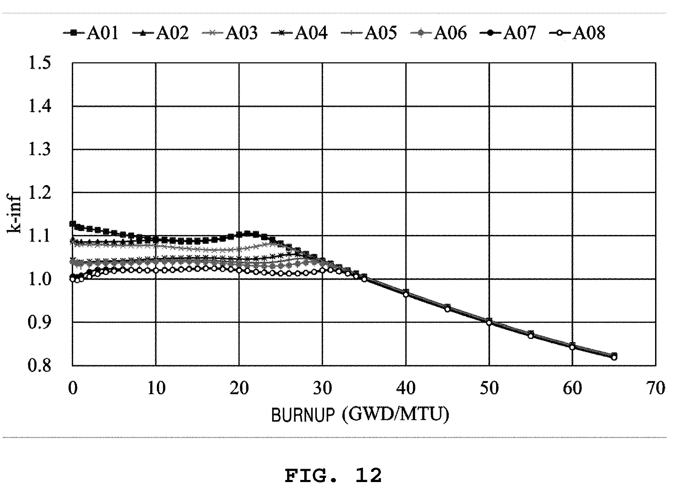

Furthermore, in the case of IGD 2 w/o, by placing the IGD rods where the moderator is most dense, fine adjustment of excess reactivity at the beginning of cycle is possible. As a result, the frequency of control rod usage in early cycle core operation may be reduced. In the case of IGD 8 w/o, by placing the IGD rods near the assembly periphery moderator, so that the excess reactivity curve corresponding to FIG. 12 is designed.

FIG. 12 is a graph showing reactivity according to burnup of nuclear fuel assemblies used in the initial operating cycle of the innovative small modular reactor (i-SMR) according to an embodiment.

When the HIGA and the IGD are integrated into nuclear fuel assemblies, excellent reactivity flattening may be realized by combining the slow depletion effect of the HIGA and the effective reactivity control of the IGD as shown in FIG. 12.

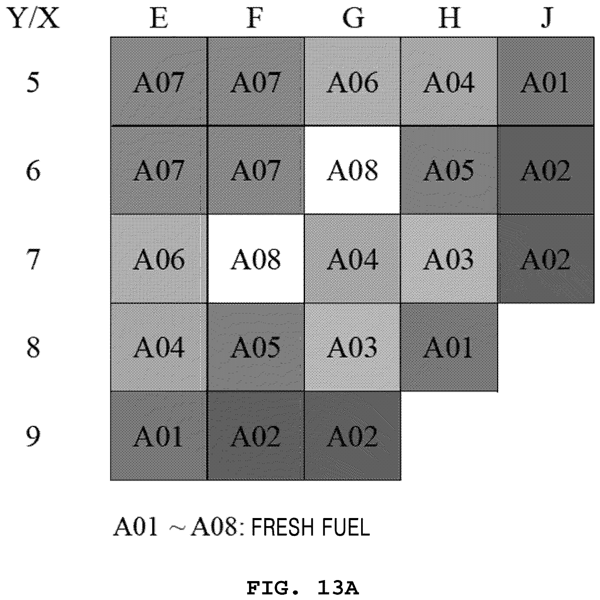

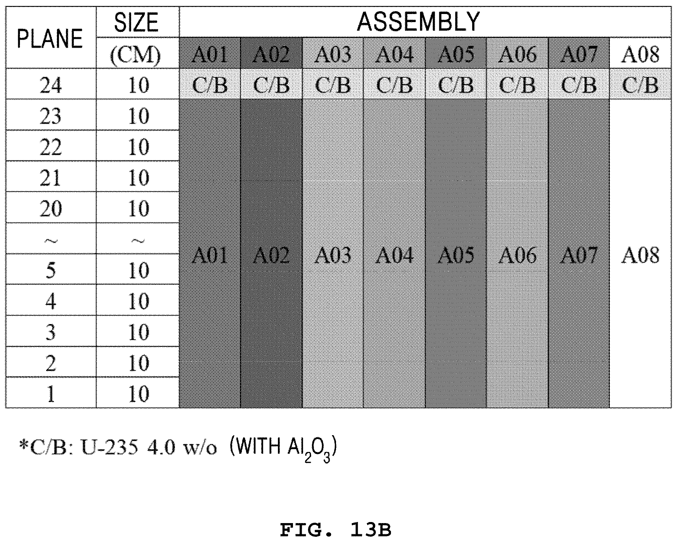

FIG. 13a and FIG. 13b are conceptual views illustrating loading patterns and vertical axis configurations of the nuclear fuel assemblies used in the initial operating cycle of the innovative small modular reactor (i-SMR) according to an embodiment.

According to another aspect of the present disclosure, an innovative small modular reactor (i-SMR) including an oxide-diluted gadolinia burnable absorber for controlling excess reactivity includes a core formed of nuclear fuel assemblies, a stainless steel reflector that cylindrically surrounds the exterior of the core formed of the nuclear fuel assemblies, and a reactor vessel having an inner diameter larger than an outer diameter of the reflector so that a downward flow path through which coolant passes is formed outside the reflector.

The fuel loading pattern is shown in FIG. 13a and FIG. 13b, and assemblies with higher reactivity are strategically placed in peripheral regions so as to optimize radial output distribution.

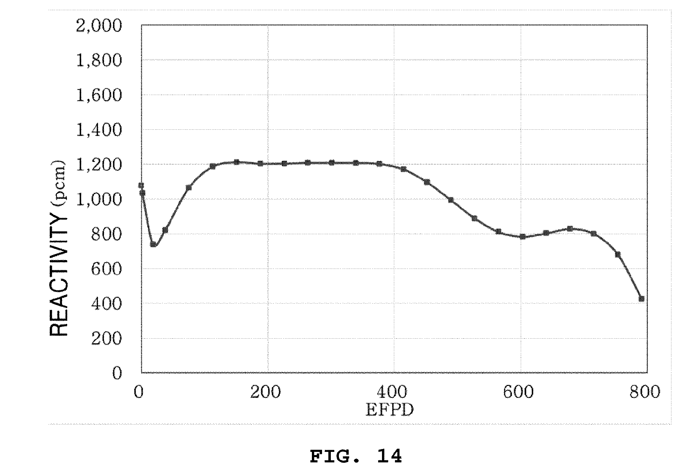

FIG. 14 is a graph showing excess reactivity under an ARO condition for effective full power days (EFPD) in the initial operating cycle of the innovative small modular reactor (i-SMR) according to an embodiment.

A reactor core calculation was performed by using a KNF KARMA/ASTRA code package. According to a conventional two-step procedure, two group cross-sections were generated through a transportation calculation for each 2D assembly using KARMA, and a 3D node calculation integrating 3D thermal/hydraulic feedback through ASTRA was performed.

In this soluble boron-free (SBF) operation, unlike conventional PWR designs where boron concentration determines criticality, control rod positions are adjusted to achieve criticality. The excess reactivity for ARO (All Rod-Out) condition, which is expressed as effective full power days (EFPD), is shown in FIG. 14.

The expected cycle length is about 840 EFPD, the peak excess reactivity reaches about 1200 pcm, and the difference between the minimum reactivity level and the maximum reactivity level is 800 pcm. This shows that BA HIGA and IGD effectively control excess reactivity.

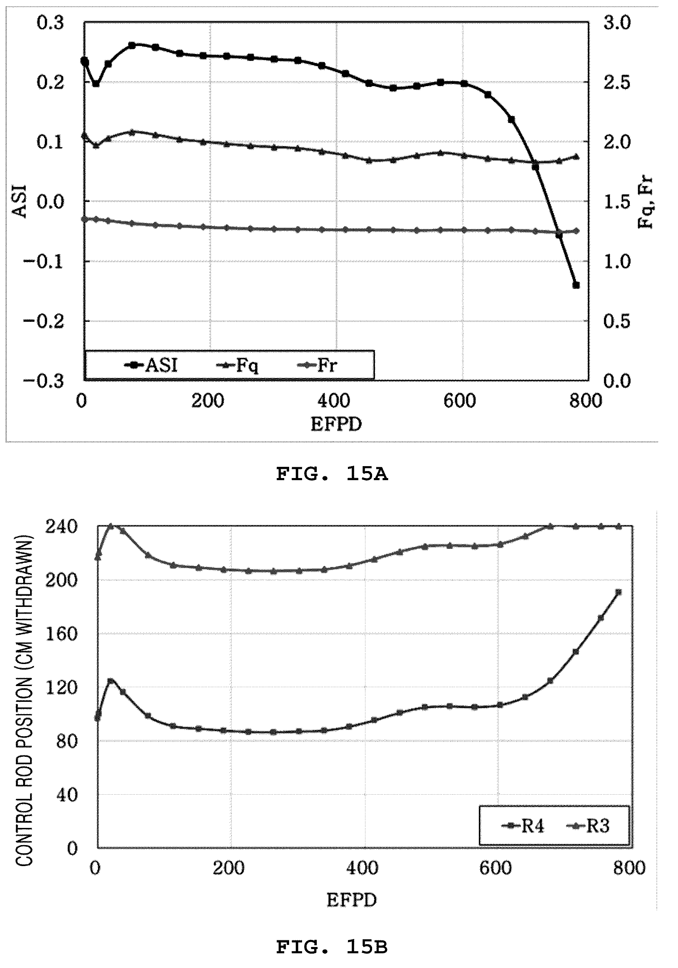

FIG. 15a and FIG. 15b are graphs showing peak factors and critical control rod positions for effective full power days (EFPD) in the initial operating cycle of the innovative small modular reactor (i-SMR) according to an embodiment.

FIGS. 15a and 15b show the peak factors and the critical positions of control banks with 50% overlap of regulating banks. A calculated cycle length exceeds 780 EFPD corresponding to 20,711 MWD/MTU in consideration of a 20% margin for control rod positioning, so that the required cycle period of 730 days is satisfied.

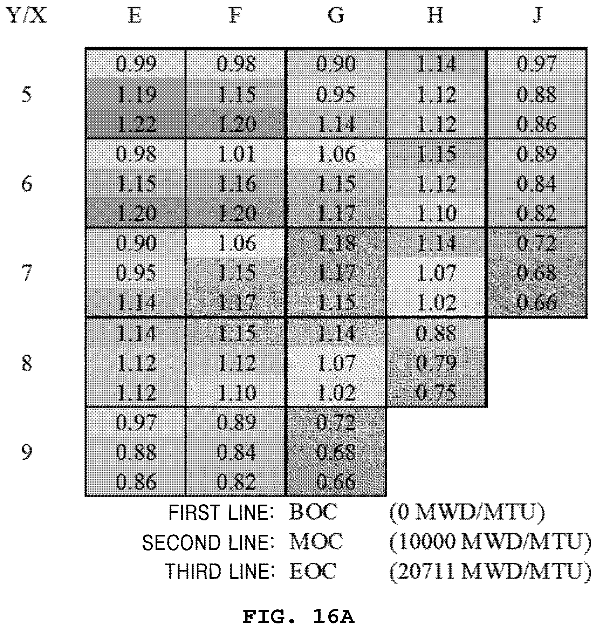

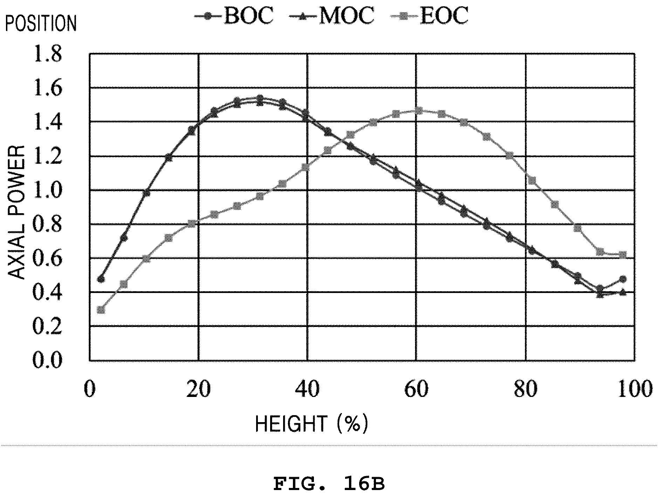

FIG. 16a and FIG. 16b are graphs showing timewise and assemblywise output distributions and axial output distributions by height in the initial operating cycle of the innovative small modular reactor (i-SMR) according to an embodiment.

The maximum radial pin peaking factor (Fr) was recorded as 1.351 with a fairly flat assemblywise radial output distribution as shown in FIG. 16a, and the maximum 3D pin peak factor (Fq) is observed at a moderate value of 2.080. FIG. 16b shows an axial 1D peaking factor (Fz) of approximately 1.5.

With a nominal linear power density of 3.86 kW/ft, the radially integrated 2D linear power density is 5.215 kW/ft and the peak 3D linear power density is 8.029 kW/ft. Both are lower than typical targets for commercial PWRs (7.5 kW/ft and 12 kW/ft).

Table 3 shows reactivity coefficients (HFP, HZP) by period in the initial operating cycle of the innovative small modular reactor (i-SMR) according to an embodiment.

**[Table 3]**

| Burnup Period | Core Output | ITC (pcm/°C) | FTC (pcm/°C) | MTC (pcm/°C) |
|---|---|---|---|---|
| BOC | HFP | -65.96 | -2.97 | -62.99 |
| | HZP | -70.86 | -3.47 | -67.39 |
| MOC | HFP | -65.96 | -3.28 | -62.67 |
| | HZP | -70.86 | -3.71 | -67.15 |
| EOC | HFP | -65.96 | -3.48 | -62.47 |
| | HZP | -70.86 | -3.90 | -66.96 |

Table 3 describes in detail the fuel temperature coefficient FTC, MTC, and subcriticality at various burnup stages. The FTC maintains a range of -4 pcm/K to -3 pcm/K similar to conventional PWR values, while the MTC remains consistently negative below -65 pcm/K due to the absence of soluble boron.

Table 4 shows subcriticality (CZP) by period in the initial operating cycle of the innovative small modular reactor (i-SMR) according to an embodiment.

**[Table 4]**

| Burnup Period | ARI (k-eff < 0.95) | | N-1 (k-eff < 0.99) | |
|---|---|---|---|---|
| | Raw | Conservative | Raw | Conservative |
| BOC | 0.93191 | 0.94852 | 0.95843 | 0.97330 |
| MOC | 0.92163 | 0.93809 | 0.94606 | 0.96091 |
| EOC | 0.90693 | 0.92397 | 0.93095 | 0.94645 |

Table 4 briefly describes subcriticality under a cold zero power (CZP) condition. The maximum subcritical k-eff for an ARO scenario is 0.93191 at the beginning of cycle (BOC) without considering uncertainties. Conservatively including uncertainties such as 10% of total rod worth and 500 pcm of reactivity, the adjusted subcriticality is 0.94852, which is lower than the subcriticality criterion of 0.95. Similarly, under N-1 conditions, the maximum subcritical k-eff is 0.95843, and the conservative value of 0.97330 considering rod worth and reactivity uncertainties remains below the N-1 subcriticality criterion of 0.99. These subcriticality calculations confirm that the reactor core may be safely shut down during operation.

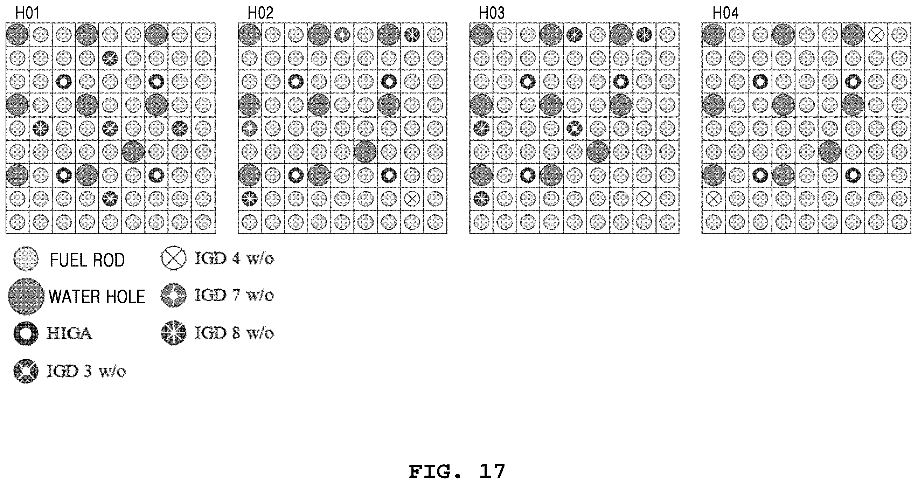

FIG. 17 is a conceptual view illustrating arrangement states of nuclear fuel assemblies used in an equilibrium cycle of the innovative small modular reactor (i-SMR) according to an embodiment.

According to an additional aspect, the nuclear fuel assembly further includes a first integral gadolinia burnable absorber (IGD) in which uranium oxide (UO₂) and gadolinia (Gd₂O₃) are homogeneously mixed.

The content of uranium in the first integral gadolinia burnable absorber (IGD) is less than that of the fuel rod. The content of gadolinia in the first integral gadolinia burnable absorber (IGD) is less than that of the highly intensive and discrete gadolinia/oxide burnable absorber (HIGA).

According to an additional aspect, the nuclear fuel assembly further includes a second integral gadolinia burnable absorber (IGD) in which uranium oxide (UO₂) and gadolinia (Gd₂O₃) are homogeneously mixed.

The content of uranium in the second integral gadolinia burnable absorber (IGD) is larger than that of the first integral gadolinia burnable absorber (IGD). The content of gadolinia in the second integral gadolinia burnable absorber (IGD) is less than that of the highly intensive and discrete gadolinia/oxide burnable absorber (HIGA). The number of second integral gadolinia burnable absorbers (IGD) is less than the number of highly intensive and discrete gadolinia/oxide burnable absorbers (HIGA) and equal to or less than the number of first integral gadolinia burnable absorbers (IGD).

According to an additional aspect, the nuclear fuel assembly further includes a third integral gadolinia burnable absorber (IGD) in which uranium oxide (UO₂) and gadolinia (Gd₂O₃) are homogeneously mixed.

The content of uranium in the third integral gadolinia burnable absorber (IGD) is larger than that of the first integral gadolinia burnable absorber (IGD). The content of gadolinia in the third integral gadolinia burnable absorber (IGD) is less than that of the highly intensive and discrete gadolinia/oxide burnable absorber (HIGA). The number of third integral gadolinia burnable absorbers (IGD) is less than the number of highly intensive and discrete gadolinia/oxide burnable absorbers (HIGA) and equal to the number of second integral gadolinia burnable absorbers (IGD).

In the equilibrium cycle, the core is loaded with four types of nuclear fuel assemblies as shown in FIG. 17, including 16 HIGA rods with gadolinium (Gd) content of 9% to 15% and IGD rods with gadolinium (Gd) content of 4 wt% to 8 wt%. The detailed configuration is shown in Table 5.

Table 5 shows a detailed configuration of nuclear fuel assemblies used in the equilibrium state cycle of the innovative small modular reactor (i-SMR) according to an embodiment.

**[Table 5]**

| Type | Fuel rod | Burnable Absorber Rod | | | | | | | | | |
|---|---|---|---|---|---|---|---|---|---|---|---|
| | | HIGA | 1st IGD | | | 2nd IGD | | | 3rd IGD | | |
| | U-235 (%) | GD₂O₃ (%) | U-235 (%) | GD₂O₃ (%) | Number | U-235 (%) | GD₂O₃ (%) | Number | U-235 (%) | GD₂O₃ (%) | Number |
| X01 | 4.95 | 15 | 2.50 | 8 | 20 | - | - | - | - | - | - |
| X02 | 4.95 | 12 | 2.50 | 8 | 4 | 2.70 | 7 | 4 | 3.35 | 4 | 4 |
| X03 | 4.95 | 12 | 2.50 | 8 | 8 | 3.35 | 4 | 4 | 3.55 | 3 | 4 |
| X04 | 4.95 | 9 | 3.50 | 4 | 4 | - | - | - | - | - | - |

The design of the nuclear fuel assembly pattern including HIGA shown in FIG. 17 pertains to nuclear fuel assembly design for the soluble boron-free reload core (after second cycle) design. In the case of reload core, since burnable absorber rod materials in assemblies burned in the previous cycle are already depleted and thus have no excess reactivity control capability, the role of burnable absorber materials in reload assemblies may be considered more significant.

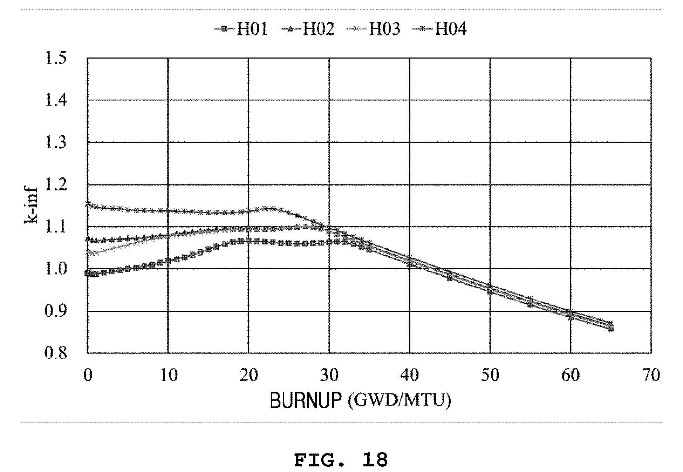

For X01, by using up to 20 IGD 8 w/o rods, the k-inf value gradually increases from a subcritical state of 1 or less at the beginning of cycle until mid-cycle as shown by the X01 curve in FIG. 18. This configuration is used as a means to control the excess reactivity of fresh fuel loaded in the reload core. For X03, by placing IGD 3 w/o in guide tube-dense regions, excess reactivity control at the beginning of cycle may be facilitated.

FIG. 18 is a graph showing reactivity according to burnup of nuclear fuel assemblies used in the equilibrium cycle of the innovative small modular reactor (i-SMR) according to an embodiment.

The reactivity curves of the assemblies illustrated in FIG. 18 indicate that fuel assemblies X01 and X02 achieve consistent excess reactivity profiles throughout depletion, while X03 and X04 are designed with gradually increasing curves to offset the decreasing reactivity of once-burned fuel assemblies.

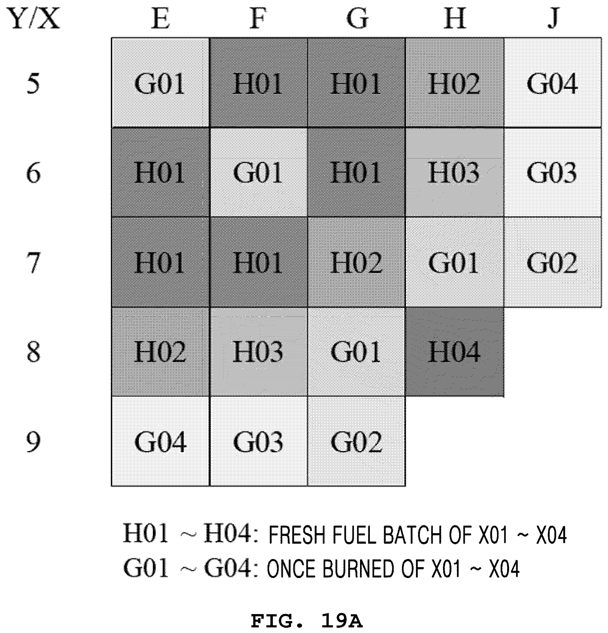

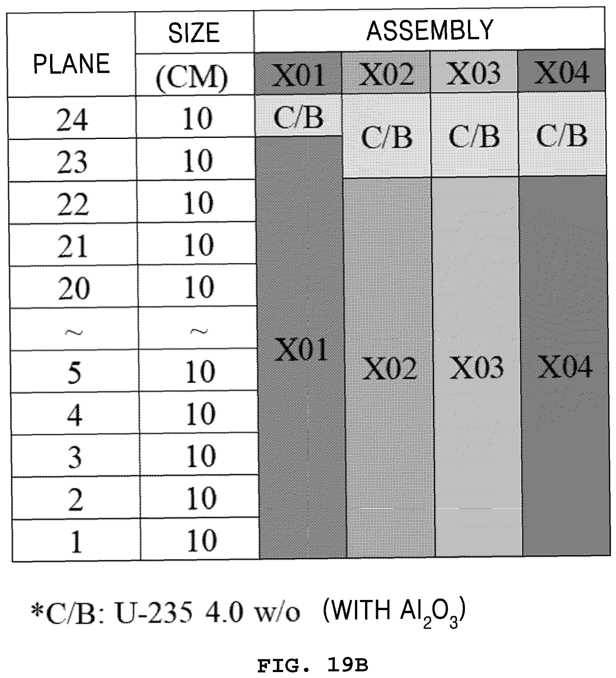

FIG. 19a and FIG. 19b are conceptual views illustrating loading patterns and vertical axis configurations of the nuclear fuel assemblies used in the equilibrium cycle of the innovative small modular reactor (i-SMR) according to an embodiment.

According to another aspect of the present disclosure, an innovative small modular reactor (i-SMR) including an oxide-diluted gadolinia burnable absorber for controlling excess reactivity includes a core formed of nuclear fuel assemblies, a stainless steel reflector that cylindrically surrounds the exterior of the core formed of the nuclear fuel assemblies, and a reactor vessel having an inner diameter larger than an outer diameter of the reflector so that a downward flow path through which coolant passes is formed outside the reflector.

FIG. 19a and FIG. 19b schematically show a core loading pattern and an axial configuration for the equilibrium cycle. The assembly X01 that is reduced by 10 cm is positioned in the center, and affects the radial output distribution toward the core periphery, thereby increasing subcriticality. Other 20 cm shortened assemblies are placed in peripheral positions so as to achieve flat power distribution.

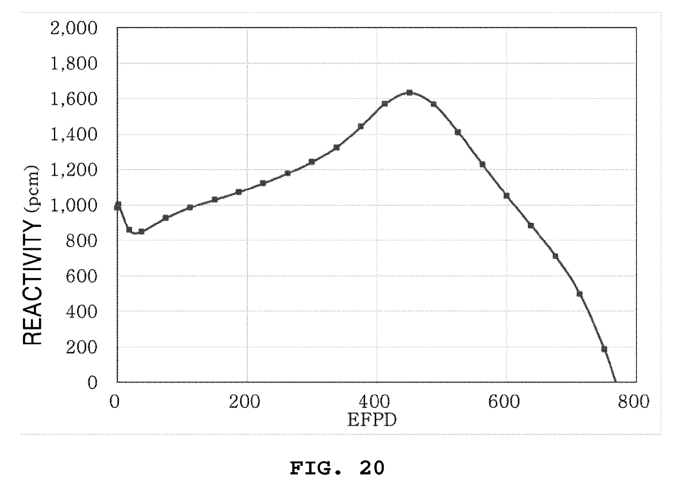

FIG. 20 is a graph showing excess reactivity under an ARO condition for effective full power days (EFPD) in the equilibrium cycle of the innovative small modular reactor (i-SMR) according to an embodiment.

FIG. 20 shows the excess reactivity curve in the ARO state, indicating a reactivity swing of approximately 800 pcm and a cycle length of 780 EFPD.

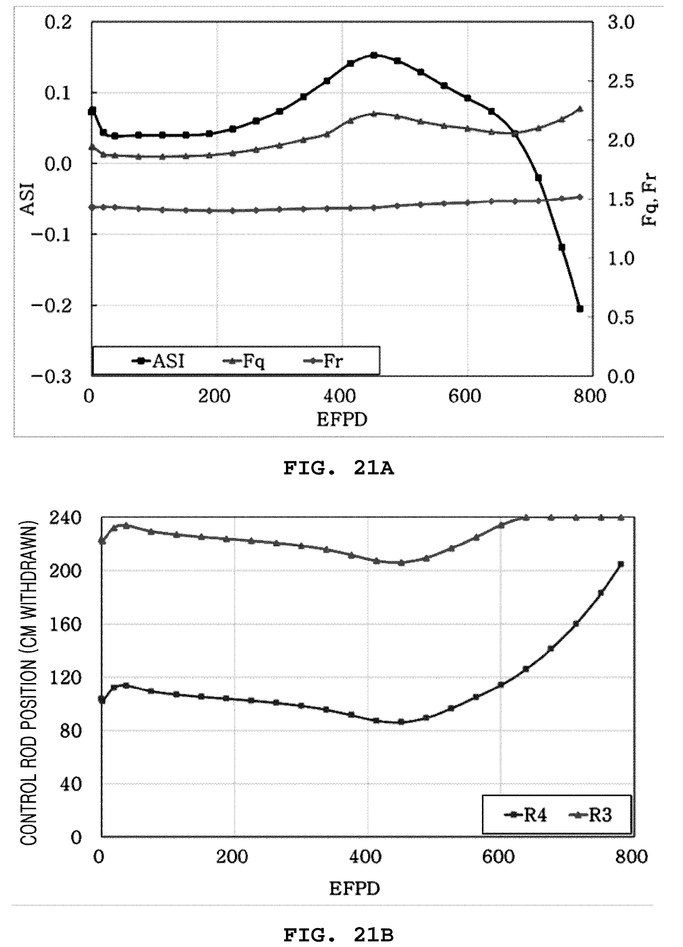

FIG. 21a and FIG. 21b are graphs showing peak factors and critical control rod positions for effective full power days (EFPD) in the equilibrium cycle of the innovative small modular reactor (i-SMR) according to an embodiment.

The peak factors, an axial shape index, and critical control rod positions for a burnup trajectory are shown in FIG. 21a and FIG. 21b, with maximum Fr and Fq reaching 1.517 and 2.265 respectively at end of cycle (EOC).

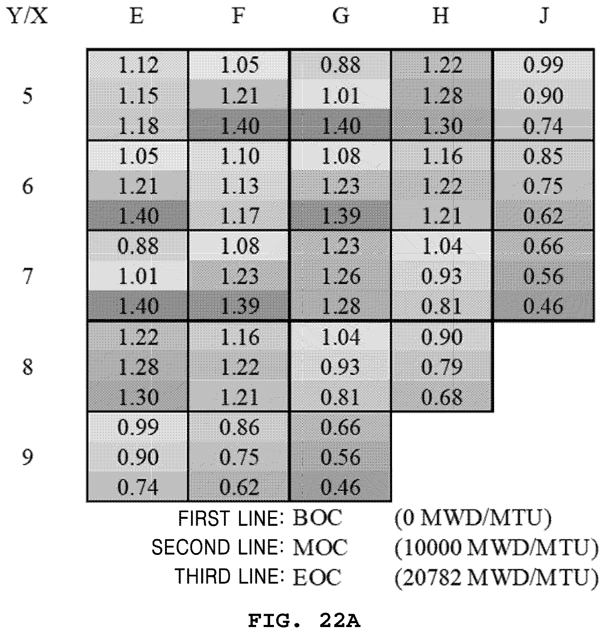

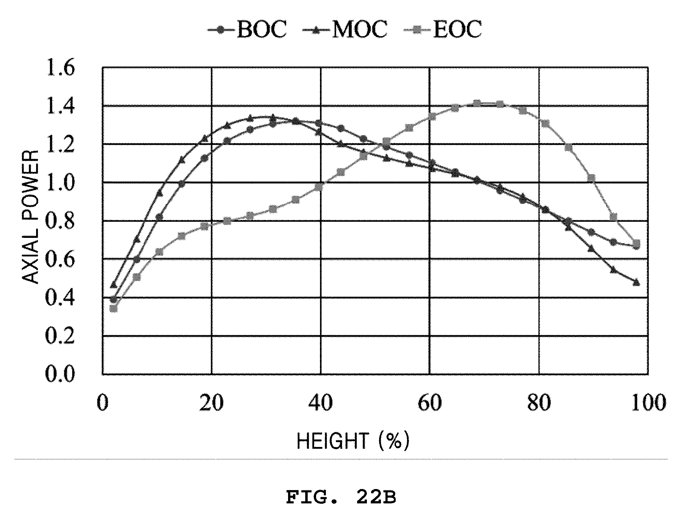

FIG. 22a and FIG. 22b are graphs showing timewise and assemblywise output distributions and axial output distributions by height in the equilibrium cycle of the innovative small modular reactor (i-SMR) according to an embodiment.

Compared to the initial cycle values, Fr is higher because the assemblywise power distribution is biased toward the H01 assembly at EOC, but Fq is lower because the axial shape is more uniform as shown in FIG. 22a and FIG. 22b.

However, the nominal linear power density is maintained at 3.86 kW/ft, resulting in a radially integrated 2D linear power density of 5.856 kW/ft and a maximum 3D linear power density of 8.743 kW/ft. Both are lower than the standard targets for commercial PWRs of 7.5 kW/ft and 12 kW/ft.

Table 6 shows reactivity coefficients (HFP, HZP) by period in the equilibrium cycle of the innovative small modular reactor (i-SMR) according to an embodiment.

**[Table 6]**

| Burnup Period | Core Output | ITC (pcm/°C) | FTC (pcm/°C) | MTC (pcm/°C) |
|---|---|---|---|---|
| BOC | HFP | -64.16 | -3.02 | -61.15 |
| | HZP | -69.54 | -3.60 | -65.94 |
| MOC | HFP | -63.70 | -3.24 | -60.47 |
| | HZP | -68.92 | -3.78 | -65.14 |
| EOC | HFP | -69.41 | -3.37 | -66.04 |
| | HZP | -74.29 | -3.95 | -70.34 |

The reactivity coefficients at beginning of cycle (BOC), middle of cycle (MOC), and end of cycle (EOC) are summarized in Table 6, with negative FTC consistent with typical PWR values and MTC appropriately maintained negative below -60 pcm/°C.

Table 7 shows subcriticality (CZP) by period in the equilibrium cycle of the innovative small modular reactor (i-SMR) according to an embodiment.

**[Table 7]**

| Burnup Period | ARI (k-eff < 0.95) | | N-1 (k-eff < 0.99) | |
|---|---|---|---|---|
| | Raw | Conservative | Raw | Conservative |
| BOC | 0.93011 | 0.94676 | 0.95464 | 0.96969 |
| MOC | 0.92380 | 0.93996 | 0.94352 | 0.95839 |
| EOC | 0.92289 | 0.93958 | 0.94186 | 0.95732 |

Table 7 also verifies the safe shutdown capability of the reactor during operation by incorporating conservative uncertainty margins for control rod worth (10%) and reactivity (500 pcm) and confirming reactor subcriticality under ARO and N-1 CZP conditions.

Although the present disclosure has been described above through embodiments referring to the attached drawings, it is not limited thereto, and should be interpreted to encompass various modifications that may be obviously derived from these embodiments by those skilled in the art. The scope of the patent claims is intended to encompass such modifications.

### [Description of Reference Numerals]

350: Oxide pellets 360: Burnable pellets
365: Gap 370: Cladding layer

## Claims

1. An oxide-diluted gadolinia burnable absorber for controlling excess reactivity of an innovative small modular reactor (i-SMR), the oxide-diluted gadolinia burnable absorber comprising:
a cylindrical burnable pellet formed by sintering a mixture of gadolinia (Gd₂O₃) and an oxide comprising any one of Al, Si, Ti, and Zr;
a cylindrical oxide pellet having the same outer diameter as that of the burnable pellet and formed by sintering the oxide contained in the burnable pellet; and
a cladding layer cladding a plurality of burnable pellets and the oxide pellet vertically stacked with respect to a cylindrical central axis,
wherein an inner diameter of the cladding layer is larger than outer diameters of the burnable pellet and the oxide pellet, so that a gap is formed between the cladding layer and the burnable pellet and between the cladding layer and the oxide pellet, and
wherein the oxide pellet is stacked on top of the burnable pellets.

2. The oxide-diluted gadolinia burnable absorber of claim 1, wherein the content of gadolinia in the burnable pellet is 10 mol% to 20 mol% of the burnable pellet.

3. The oxide-diluted gadolinia burnable absorber of claim 1, wherein the oxide of the burnable pellet is Al₂O₃.

4. A nuclear fuel assembly comprising an oxide-diluted gadolinia burnable absorber for controlling excess reactivity of an innovative small modular reactor (i-SMR), the nuclear fuel assembly comprising:
a fuel rod comprising nuclear fuel;
a coolant passage through which coolant for moving heat generated by nuclear fission circulates; and
a highly intensive and discrete gadolinia/oxide burnable absorber (HIGA),
wherein the highly intensive and discrete gadolinia/oxide burnable absorber (HIGA) comprises:
a cylindrical burnable pellet formed by sintering a mixture of gadolinia (Gd₂O₃) and an oxide comprising any one of Al, Si, Ti, and Zr;
a cylindrical oxide pellet having the same outer diameter as that of the burnable pellet and formed by sintering the oxide contained in the burnable pellet; and
a cladding layer cladding a plurality of burnable pellets and the oxide pellet vertically stacked with respect to a cylindrical central axis,
wherein an inner diameter of the cladding layer is larger than outer diameters of the burnable pellet and the oxide pellet, so that a gap is formed between the cladding layer and the burnable pellet and between the cladding layer and the oxide pellet, and
wherein the oxide pellet is stacked on top of the burnable pellets.

5. The nuclear fuel assembly of claim 4, wherein the content of gadolinia in the burnable pellet is 10 mol% to 20 mol% of an entire burnable pellet.

6. The nuclear fuel assembly of claim 4, wherein the oxide of the burnable pellet is Al₂O₃.

7. The nuclear fuel assembly of claim 4, further comprising:
a first integral gadolinia burnable absorber (IGD) in which uranium oxide (UO₂) and gadolinia (Gd₂O₃) are homogeneously mixed,
wherein the content of uranium in the first integral gadolinia burnable absorber (IGD) is less than that of the fuel rod, and
wherein the content of gadolinia in the first integral gadolinia burnable absorber (IGD) is less than that of the highly intensive and discrete gadolinia/oxide burnable absorber (HIGA) .

8. The nuclear fuel assembly of claim 7, further comprising:
a second integral gadolinia burnable absorber (IGD) in which uranium oxide (UO₂) and gadolinia (Gd₂O₃) are homogeneously mixed,
wherein the content of uranium in the second integral gadolinia burnable absorber (IGD) is less than that of the first integral gadolinia burnable absorber (IGD),
wherein the content of gadolinia in the second integral gadolinia burnable absorber (IGD) is less than that of the highly intensive and discrete gadolinia/oxide burnable absorber (HIGA), and
wherein the number of second integral gadolinia burnable absorbers (IGD) is less than the number of highly intensive and discrete gadolinia/oxide burnable absorbers (HIGA), and is equal to or larger than the number of first integral gadolinia burnable absorbers (IGD).

9. The nuclear fuel assembly of claim 7, further comprising:
a second integral gadolinia burnable absorber (IGD) in which uranium oxide (UO₂) and gadolinia (Gd₂O₃) are homogeneously mixed,
wherein the content of uranium in the second integral gadolinia burnable absorber (IGD) is larger than that of the first integral gadolinia burnable absorber (IGD),
wherein the content of gadolinia in the second integral gadolinia burnable absorber (IGD) is less than that of the highly intensive and discrete gadolinia/oxide burnable absorber (HIGA), and
wherein the number of second integral gadolinia burnable absorbers (IGD) is less than the number of highly intensive and discrete gadolinia/oxide burnable absorbers (HIGA), and is equal to or less than the number of first integral gadolinia burnable absorbers (IGD).

10. The nuclear fuel assembly of claim 9, further comprising:
a third integral gadolinia burnable absorber (IGD) in which uranium oxide (UO₂) and gadolinia (Gd₂O₃) are homogeneously mixed,
wherein the content of uranium in the third integral gadolinia burnable absorber (IGD) is larger than that of the first integral gadolinia burnable absorber (IGD),
wherein the content of gadolinia in the third integral gadolinia burnable absorber (IGD) is less than that of the highly intensive and discrete gadolinia/oxide burnable absorber (HIGA), and
wherein the number of third integral gadolinia burnable absorbers (IGD) is less than the number of highly intensive and discrete gadolinia/oxide burnable absorbers (HIGA), and is equal to the number of second integral gadolinia burnable absorbers (IGD).

11. An innovative small modular reactor (i-SMR) comprising an oxide-diluted gadolinia burnable absorber for controlling excess reactivity, the innovative small modular reactor (i-SMR) comprising:
a core formed of nuclear fuel assemblies of claim 7 or claim 8;
a reflector formed of a stainless steel material, the reflector cylindrically surrounding the outside of the core formed of the nuclear fuel assemblies; and
a reactor vessel having an inner diameter larger than an outer diameter of the reflector so that a downward flow path through which coolant passes is formed outside the reflector.

12. An innovative small modular reactor (i-SMR) comprising an oxide-diluted gadolinia burnable absorber for controlling excess reactivity, the innovative small modular reactor (i-SMR) comprising:
a core formed of nuclear fuel assemblies according to any one of claim 7, claim 9, and claim 10;
a reflector formed of a stainless steel material, the reflector cylindrically surrounding the outside of the core formed of the nuclear fuel assemblies; and
a reactor vessel having an inner diameter larger than an outer diameter of the reflector so that a downward flow path through which coolant passes is formed outside the reflector.
